# EUROPÄISCHE PATENTSCHRIFT

(11) **EP 4 335 792 B1**
(45) Veröffentlichungstag und Bekanntmachung des Hinweises auf die Patenterteilung: **02.07.2025**
(21) Anmeldenummer: 23196191.3
(22) Anmeldetag: 08.09.2023
(51) Int. Cl.: B65G 47/244, B27M 1/08, B65G 47/31

(54) **HOLZLAMELLENHANDLINGANLAGE, SOWIE EIN VERFAHREN ZUM BETREIBEN DER HOLZLAMELLENHANDLINGANLAGE**
WOOD LAMELLA HANDLING SYSTEM AND METHOD FOR OPERATING THE WOOD LAMELLA HANDLING SYSTEM
INSTALLATION DE MANIPULATION DE LAMELLES DE BOIS AINSI QUE PROCÉDÉ DE FONCTIONNEMENT DE L'INSTALLATION DE MANIPULATION DE LAMELLES DE BOIS

(30) Priorität: 09.09.2022 AT 506942022
(43) Veröffentlichungstag der Anmeldung: 13.03.2024
(73) Patentinhaber: Fill Gesellschaft m.b.H., 4942 Gurten (AT)
(72) Erfinder: METZ, Karl, 4970 Eitzing (AT)
(74) Vertreter: Burger, Hannes

(56) Entgegenhaltungen:
- DE-A1- 102009 019 512
- US-A1- 2008 283 362

## Beschreibung

Die Erfindung betrifft eine Holzlamellenhandlinganlage, sowie ein Verfahren zum Betreiben der Holzlamellenhandlinganlage.

Die EP0375807A1 offenbart ein Verfahren und eine Vorrichtung zum Herstellen von Holzlamellen aus Schnittholz. Das Handling der Holzlamellen ist in einer Vorrichtung, wie sie in der EP0375807A1 beschrieben ist, nur mit unzureichender Genauigkeit möglich.

DE 10 2009 019512 A1 offenbart eine Holzlamellenhandlinganlage nach dem Oberbegriff des Anspruchs 1.

Aufgabe der vorliegenden Erfindung war es, die Nachteile des Standes der Technik zu überwinden und eine verbesserte Holzlamellenhandlinganlage, sowie ein Verfahren zum Betreiben der Holzlamellenhandlinganlage zur Verfügung zu stellen.

Diese Aufgabe wird durch eine Vorrichtung und ein Verfahren gemäß den Ansprüchen gelöst. Erfindungsgemäß ist eine Holzlamellenhandlinganlage ausgebildet. Die Holzlamellenhandlinganlage umfasst:
- einen ersten Bandförderer mit einer Aufnahmeebene zur Aufnahme einer Holzlamellenlage und zum Fördern der Holzlamellenlage in einer ersten Förderrichtung quer zu einer Lamellenlängsrichtung;
- eine Bereitstellstation zum Bereitstellen einer Holzlamellenlage oder eines Stapels von mehreren übereinander angeordneten Holzlamellenlagen;
- ein Transfermittel zum Abnehmen der Holzlamellenlage von der Bereitstellstation und zum Auflegen der Holzlamellenlage auf den ersten Bandförderer;
- ein Abzugsbandförderer mit einer Abzugsbandaufnahmeebene zum Vereinzeln der Holzlamellen der am ersten Bandförderer aufgenommenen Holzlamellenlage, wobei sich der Abzugsbandförderer und der erste Bandförderer in der ersten Förderrichtung in einem Überlappungsbereich zumindest teilweise überlappen, wobei der Abzugsbandförderer und der erste Bandförderer mit unterschiedlichen Fördergeschwindigkeiten betreibbar sind;
- eine Ausrichtstation mit zumindest zwei in der Lamellenlängsrichtung zueinander beabstandete Ausrichtelemente, wobei die Ausrichtelemente derart in die Abzugsbandaufnahmeebene einbringbar sind, dass die am Abzugsbandförderer transportierten Holzlamellen an den Ausrichtelementen zur Anlage gebracht und dadurch ausgerichtet werden können, wobei die Ausrichtelemente von der Abzugsbandaufnahmeebene entfernbar sind, um ein Weiterfördern der Holzlamellen mittels des Abzugsbandförderers zu ermöglichen.

Die erfindungsgemäße Holzlamellenhandlinganlage bringt den Vorteil mit sich, dass die einzelnen in einer Holzlamellenlage bereitgestellten Holzlamellen gut vereinzelt werden können und für die Weiterverarbeitung entsprechend ausgerichtet werden können.

Weiters kann vorgesehen sein, dass beim Auflegen der Holzlamellenlage auf den ersten Bandförderer das Transfermittel mit dem ersten Bandförderer in der Horizontalbewegung quer zur Lamellenlängsrichtung synchronisiert wird. Durch diese Maßnahme kann ein präzises Ablegen der Holzlamellenlage erreicht werden.

In einer ersten Ausführungsvariante kann vorgesehen sein, dass der erste Bandförderer mit einer kontinuierlichen Geschwindigkeit betrieben wird. In einer weiteren Ausführungsvariante kann auch vorgesehen sein, dass der erste Bandförderer mit unterschiedlichen Geschwindigkeiten taktend betrieben wird.

Weiters kann es zweckmäßig sein, wenn in Lamellenlängsrichtung zueinander beabstandet ein erster Abzugsbandförderer, ein zweiter Abzugsbandförderer und ein dritter Abzugsbandförderer angeordnet sind, wobei zwischen dem ersten Abzugsbandförderer und dem zweiten Abzugsbandförderer ein erstes Ausrichtelement angeordnet ist. Besonders eine derart ausgebildete Ausrichtstation kann zum einfachen und möglichst genauen Ausrichten der einzelnen Holzlamellen dienen.

Ferner kann vorgesehen sein, dass die Ausrichtelemente an einem umlaufenden Zugmittel angeordnet sind, wobei die Ausrichtelemente durch Drehung des umlaufenden Zugmittels in die Abzugsbandaufnahmeebene einbringbar und wieder entfernbar sind. Dies bringt den Vorteil mit sich, dass durch diese Maßnahme die Ausrichtelemente einfach in die Abzugsbandaufnahmeebene eingebracht werden können, sodass die Holzlamellen an den Ausrichtelementen anstehen und dadurch ausgerichtet werden. Anschließend können die Ausrichtelemente durch Drehung des umlaufenden Zugmittels einfach wieder aus der Abzugsbandaufnahmeebene entfernt werden, um einen Weitertransport der Holzlamellen zu ermöglichen. Insbesondere kann hierbei vorgesehen sein, dass das umlaufende Zugmittel hierbei mit unterschiedlichen Geschwindigkeiten betreibbar ist, um die Ausrichtelemente in die Abzugsbandaufnahmeebene einbringen zu können und nach Anschlag der Holzlamellen möglichst schnell wieder aus der Abzugsbandaufnahmeebene entfernen zu können.

Darüber hinaus kann vorgesehen sein, dass der Abzugsbandförderer in der ersten Förderrichtung hintereinander angeordnet einen ersten Abzugsbandförderteil und einen zweiten Abzugsbandförderteil umfasst. Dies bringt den Vorteil mit sich, dass durch die Unterteilung des Abzugsbandförderers in mehrere Abzugsbandförderteile eine höhere Prozessgenauigkeit erreicht werden kann. Insbesondere kann vorgesehen sein, dass der erste Abzugsbandförderteil und der zweite Abzugsbandförderteil durch jeweils eigene Förderbänder gebildet ist. Insbesondere kann vorgesehen sein, dass der erste Abzugsbandförderteil und der zweite Abzugsbandförderteil in Lamellenlängsrichtung nebeneinander angeordnet sind und sich teilweise überlappen.

Vorteilhaft ist auch eine Ausprägung, gemäß welcher vorgesehen sein kann, dass anschließend an den Abzugsbandförderer eine Beschleunigungsstation ausgebildet ist, wobei die Beschleunigungsstation eine erste Beschleunigungswalze, welche um eine erste Rotationsachse drehbar ist und eine zweite Beschleunigungswalze, welche um eine zweite Rotationsachse drehbar ist, aufweist, wobei die erste Beschleunigungswalze und die zweite Beschleunigungswalze in der Lamellenlängsrichtung zueinander beabstandet angeordnet sind, wobei die erste Rotationsachse parallel zur Abzugsbandaufnahmeebene angeordnet ist und in einem ersten Rotationsachsenwinkel zur Lamellenlängsrichtung ausgerichtet ist und die zweite Rotationsachse parallel zur Abzugsbandaufnahmeebene angeordnet ist und in einem zweiten Rotationsachsenwinkel zur Lamellenlängsrichtung ausgerichtet ist, wobei der erste Rotationsachsenwinkel zwischen 15° und 75°, insbesondere zwischen 30° und 60°, bevorzugt zwischen 40° und 50° beträgt, wobei der zweite Rotationsachsenwinkel zwischen 15° und 75°, insbesondere zwischen 30° und 60°, bevorzugt zwischen 40° und 50° beträgt. Dies bringt den Vorteil mit sich, dass mittels der Beschleunigungsstation die einzelnen Holzlamellen in der ersten Förderrichtung quer zur Lamellenlängsrichtung beschleunigt werden können, aber auch gleichzeitig in der zweiten Förderrichtung in Lamellenlängsrichtung beschleunigt werden können.

Insbesondere kann vorgesehen sein, dass der erste Rotationsachsenwinkel und der zweite Rotationsachsenwinkel gleich groß sind.

Gemäß einer Weiterbildung ist es möglich, dass die erste Beschleunigungswalze mit einer ersten Niederhalterwalze zusammenwirkt, wobei die erste Niederhalterwalze nachgiebig ausgebildet ist, insbesondere dass die erste Niederhalterwalze über den Umfang verteilt angeordnete radial nach außen abstehende Niederhaltewalzenborsten aufweist. Durch diese Maßnahme kann erreicht werden, dass die von der Beschleunigungswalze auf die Holzlamellen aufgebrachten Kräfte innerhalb einer bestimmten Grenze gehalten werden können. Somit kann eine Beschädigung der Holzlamellen möglichst hintangehalten werden.

Weiters kann vorgesehen sein, dass die Niederhalterwalze durch eine Schleifbürste gebildet ist, wobei die Niederhaltewalzenborsten eine Körnung aufweisen.. Besonders bei einer Körnung auf den Niederhaltewalzenborsten kann ein gutes Niederhalteverhalten erreicht werden, um die Holzlamellen möglichst gut vereinzeln zu können.

Insbesondere kann vorgesehen sein, dass die Niederhalterwalze durch eine Schleifbürste in Form einer Rundbürste gebildet wird. Die Niederhaltewalzenborsten können hierbei aus einem verschleißfesten Material gebildet sein. Insbesondere können die Niederhaltewalzenborsten aus einem Material gebildet sein, welches einen guten Reibwert zu den Holzlamellen aufweist. Hierbei kann vorgesehen sein, dass die Niederhaltewalzenborsten eine Körnung aufweisen.

Die Körnung kann zwischen 90 und 350, insbesondere zwischen 120 und 300, bevorzugt zwischen 150 und 250 betragen. Besonders bei einer derartigen Körnung kann ein gutes Niederhalteverhalten erreicht werden, um die Holzlamellen möglichst gut vereinzeln zu können.

Die Körnung wird in Mesh angegeben und die Bestimmung der Körnung ist in DIN ISO 6344 bzw. entsprechend der Normen der Federation of European Producers of Abrasives (FEPA) genormt.

Insbesondere kann vorgesehen sein, dass die Niederhaltewalzenborsten aus einem Stahlmaterial gebildet sind. Die Körnung kann durch ein Siliziumcarbid gebildet sein. Ferner kann es zweckmäßig sein, wenn ein Längsauszug ausgebildet ist, welcher zum Fördern der vereinzelten Holzlamellen in einer zweiten Förderrichtung entlang der Lamellenlängsrichtung dient, wobei der Längsauszug zumindest ein erstes Längsauszugsförderband und ein zweites Längsauszugsförderband umfasst, wobei das erste Längsauszugsförderband und das zweite Längsauszugsförderband in der zweiten Förderrichtung hintereinander angeordnet sind, wobei das erste Längsauszugsförderband eine erste Förderorientierung aufweist, welche in einem ersten Förderorientierungswinkel zur zweiten Förderrichtung ausgebildet ist und wobei das zweite Längsauszugsförderband eine zweite Förderorientierung aufweist, welche in einem zweiten Förderorientierungswinkel zur zweiten Förderrichtung ausgebildet ist, wobei der erste Förderorientierungswinkel zwischen 1° und 30°, insbesondere zwischen 3° und 20°, bevorzugt zwischen 5° und 10° beträgt, wobei der zweite Förderorientierungswinkel zwischen 1° und 30°, insbesondere zwischen 3° und 20°, bevorzugt zwischen 5° und 10° beträgt, wobei der Längsauszug einen Ausrichtanschlag mit einer Ausrichtanschlagfläche aufweist, wobei die Ausrichtanschlagfläche parallel zur zweiten Förderrichtung ausgerichtet ist. Dies bringt den Vorteil mit sich, dass durch diese Maßnahme eine exakte Ausrichtung der Holzlamelle möglich ist, wobei die Holzlamelle schon während deren Ausrichtung in der zweiten Förderrichtung gefördert werden kann.

Weiters kann vorgesehen sein, dass am Ausrichtanschlag, vertikal angeordnete Rollen ausgebildet sind. Die vertikal angeordneten Rollen können derart positioniert sein, dass eine Tangente an eine Mantelfläche der Rollen in der Ausrichtanschlagfläche liegt. Durch die vertikal angeordneten Rollen kann die Reibung zwischen den Holzlamellen und dem Ausrichtanschlag bei einer Bewegung der Lamelle möglichst geringgehalten werden.

Als Förderorientierung wird die theoretische Förderrichtung des Längsauszugsförderbandes bezeichnet. Die tatsächliche Förderrichtung wird, sobald die Holzlamelle am Ausrichtanschlag anliegt in der zweiten Förderrichtung sein und weicht somit von der Förderorientierung der Längsauszugsförderbänder ab. Somit kommt es zu einer Relativbewegung zwischen dem Längsauszugsförderband und der Holzlamelle, wodurch die Holzlamelle an den Ausrichtanschlag angepresst wird.

Insbesondere kann vorgesehen sein, dass der erste Förderorientierungswinkel und der zweite Förderorientierungswinkel gleich groß sind.

Darüber hinaus kann vorgesehen sein, dass das Transfermittel einen Transferkopf umfasst, der zum Manipulieren der Holzlamellenlage ausgebildet ist, wobei der Transferkopf einen ersten Saugbalken und einen zweiten Saugbalken umfasst, wobei der erste Saugbalken und der zweite Saugbalken in der Lamellenlängsrichtung in einem Abstand zueinander angeordnet sind, wobei das Transfermittel einen Unterdruckerzeuger, welcher zum Ausbilden eines Unterdruckes im ersten Saugbalken und im zweiten Saugbalken ausgebildet ist. Ein derart ausgebildeter Transferkopf bringt den Vorteil mit sich, dass damit verschiedenartig ausgebildete Holzlamellenlagen transportiert werden können.

Insbesondere kann vorgesehen sein, dass der erste Saugbalken und der zweite Saugbalken eine Längserstreckung in der ersten Förderrichtung aufweisen.

Weiters kann vorgesehen sein, dass eine erste Klemmrollenanordnung ausgebildet ist, welche zum Fördern der vereinzelten Holzlamellen in der zweiten Förderrichtung dient. Dies bringt den Vorteil mit sich, dass durch diese Maßnahme die einzelnen Holzlamellen mit einer exakten Fördergeschwindigkeit transportiert werden können.

Gemäß einer besonderen Ausprägung ist es möglich, dass in zweiter Förderrichtung anschließend an die erste Klemmrollenanordnung ein optisches Erfassungsmittel ausgebildet ist, mittels dem die Oberfläche der vereinzelten Holzlamellen erfassbar ist. Durch das optische Erfassungsmittel kann die Beschaffenheit der Oberfläche der Holzlamellen erfasst werden.

Entsprechend einer vorteilhaften Weiterbildung kann vorgesehen sein, dass in zweiter Förderrichtung anschließend an das optische Erfassungsmittel eine zweite Klemmrollenanordnung ausgebildet ist, wobei die erste Klemmrollenanordnung und die zweite Klemmrollenanordnung in einem Klemmrollabstand zueinander angeordnet sind, wobei der Klemmrollenabstand kleiner ist als eine minimale Lamellenlänge. Durch diese Maßnahme kann erreicht werden, dass die Holzlamelle über dessen komplette Länge in gleichmäßiger Geschwindigkeit durch das optische Erfassungsmittel geführt werden kann. Insbesondere kann vorgesehen sein, dass die erste Klemmrollenanordnung und die zweite Klemmrollenanordnung eine gleich große Fördergeschwindigkeit aufweisen. Weiters kann vorgesehen sein, dass die Holzlamelle zwischen der ersten Klemmrollenanordnung und der zweiten Klemmrollenanordnung frei geführt ist. Die erste Klemmrollenanordnung und die zweite Klemmrollenanordnung können durch deren Beabstandung zueinander so ausgebildet sein, dass die Holzlamelle während dem Durchtritt durch das optische Erfassungsmittel immer von der ersten Klemmrollenanordnung bzw. von der zweiten Klemmrollenanordnung vorgeschoben wird.

Insbesondere kann es vorteilhaft sein, wenn in zweiter Förderrichtung anschließend an die zweite Klemmrollenanordnung ein Abbremstisch mit einer Abbremstischauflagefläche und einem oberhalb der Abbremstischauflagefläche angeordneten Abbremselement ausgebildet ist, wobei das Abbremselement zum Andrücken der Holzlamellen an die Abbremstischauflagefläche ausgebildet ist. Dies bringt den Vorteil mit sich, dass durch diese Maßnahme die Holzlamelle nach dem optischen Erfassen bzw. nach dem Fördern in zweiter Förderrichtung mittels der zweiten Klemmrollenanordnung am Abbremstisch abgebremst werden kann und für ein Weiterfördern vorbereitet werden kann.

Ferner kann vorgesehen sein, dass an dem umlaufenden Zugmittel zumindest zwei der ersten Ausrichtelemente angeordnet sind. Dies bringt den Vorteil mit sich, dass das umlaufende Zugmittel nicht um eine komplette Runde geführt werden muss, um diese zum Abbremsen neu zu positionieren, sondern dass nur ein partielles Weiterführen des umlaufenden Zugmittels ausreicht, um eines der ersten Ausrichtelemente außer Eingriff zu bringen und ein weiteres der ersten Ausrichtelement in Eingriff zu bringen.

Darüber hinaus kann vorgesehen sein, dass im Bereich des Abbremstisches eine Querförderanlage ausgebildet ist, wobei die Querförderanlage zum Fördern der Holzlamellen in einer dritten Förderrichtung quer zur Lamellenlängsrichtung dienen kann, wobei die Querförderanlage ein umlaufendes Zugmittel mit mehreren darauf angeordneten Mitnehmern umfasst. Dies bringt den Vorteil mit sich, dass durch diese Maßnahme die einzelnen Holzlamellen ausgerichtet vom Klemmtisch abgezogen werden können.

Erfindungsgemäß ist ein Verfahren zum Betreiben der Holzlamellenhandlinganlage vorgesehen. Das Verfahren umfasst die Verfahrensschritte:
- Bereitstellen einer Holzlamellenlage oder eines Stapels von mehreren übereinander angeordneten Holzlamellenlagen an der Bereitstellstation;
- Abnehmen der Holzlamellenlage von der Bereitstellstation und Auflegen der Holzlamellenlage auf den ersten Bandförderer mittels des Transfermittels;
- Fördern der Holzlamellenlage in der ersten Förderrichtung quer zur Lamellenlängsrichtung mittels dem ersten Bandförderer in einer ersten Fördergeschwindigkeit;
- Betreiben des Abzugsbandförderers mit einer zweiten Fördergeschwindigkeit, wobei die zweite Fördergeschwindigkeit größer ist, als die erste Fördergeschwindigkeit, und wobei dadurch die Holzlamellen vom Abzugsbandförderer abgezogen werden wenn sie im Überlappungsbereich sind, wobei am Abzugsbandförderer einen größeren Abstand zueinander aufweisen, als am ersten Bandförderer;
- Einbringen der Ausrichtelemente der Ausrichtstation in die Abzugsbandaufnahmeebene, so dass die am Abzugsbandförderer transportierten Holzlamellen an den Ausrichtelementen zur Anlage gebracht und dadurch ausgerichtet werden;
- Entfernen der Ausrichtelemente von der Abzugsbandaufnahmeebene, um ein Weiterfördern der Holzlamellen mittels des Abzugsbandförderers zu ermöglichen.

Eine Holzlamellenlage im Sinne dieses Dokumentes sind mehrere nebeneinander angeordnete Holzlamellen.

Eine Holzlamelle weist eine Längserstreckung, auch Länge genannt, eine Quererstreckung, auch Breite genannt und eine Höhe, auch Dicke genannt auf.

Als Lamellenlängsrichtung wird die Richtung der Längserstreckung der Holzlamelle bezeichnet. Da die Holzlamellenhandlinganlage zum Handling von gleichgerichteten Holzlamellen ausgebildet ist und die Holzlamellen während dem Handling in der Holzlamellenhandlinganlage auch nicht gedreht werden, ist die Lamellenlängsrichtung von an der Holzlamellenhandlinganlage gehandelten Lamellen immer gleich im Hinblick auf die Holzlamellenhandlinganlage. Aus diesem Grunde wird der Einfachheit halber auch bei Förderrichtungen bzw. Bauteilausrichtungen der Holzlamellenhandlinganlage von der Lamellenlängsrichtung gesprochen. Die Lamellenlängsrichtung ist somit eine Richtungsbezeichnung in der Holzlamellenhandlinganlage, die bei der Bestimmungsgemäßen Verwendung der Holzlamellenhandlinganlage mit der Lamellenlängsrichtung einer an der Holzlamellenhandlinganlage manipulierten Holzlamelle übereinstimmt, jedoch nicht das Vorhandensein dieser Holzlamelle benötigt.

Ein Bandförderer im Sinne dieses Dokumentes ist ein Stetigförderer mit einem zwischen einer Antriebstrommel und einer Umlenktrommel umlaufenden Zugmittel. Das Zugmittel kann die Aufnahmeebene zum Aufnehmen der Holzlamellenlage ausbilden. Insbesondere kann vorgesehen sein, dass das Zugmittel in Form eines Förderbandgurtes ausgebildet ist. Alternativ dazu kann auch vorgesehen sein, dass das Zugmittel in Form von Förderketten ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Holzlamellenhandlinganlage in einer perspektivischen Ansicht;
- Fig. 2: das erste Ausführungsbeispiel der Holzlamellenhandlinganlage in einer perspektivischen Detailansicht mit Darstellung einer Bereitstellstation;
- Fig. 3: das erste Ausführungsbeispiel der Holzlamellenhandlinganlage in einer perspektivischen Detailansicht mit Darstellung einer Beschleunigungsstation;
- Fig. 4: das erste Ausführungsbeispiel der Holzlamellenhandlinganlage in einer Draufsicht mit Darstellung der Beschleunigungsstation;
- Fig. 5: das erste Ausführungsbeispiel der Holzlamellenhandlinganlage in einer perspektivischen Detailansicht mit Darstellung einer Querförderanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

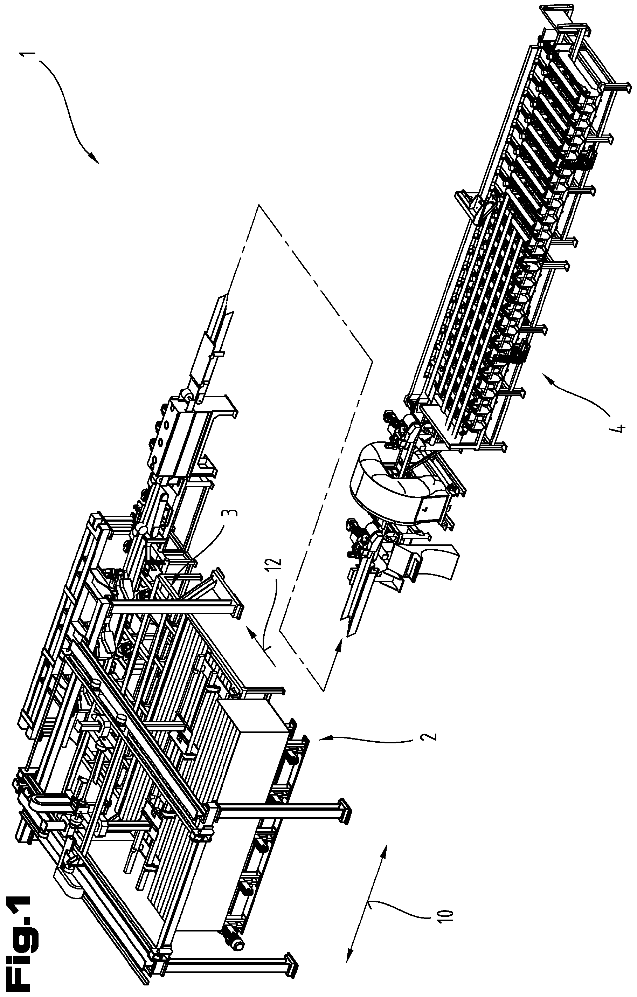

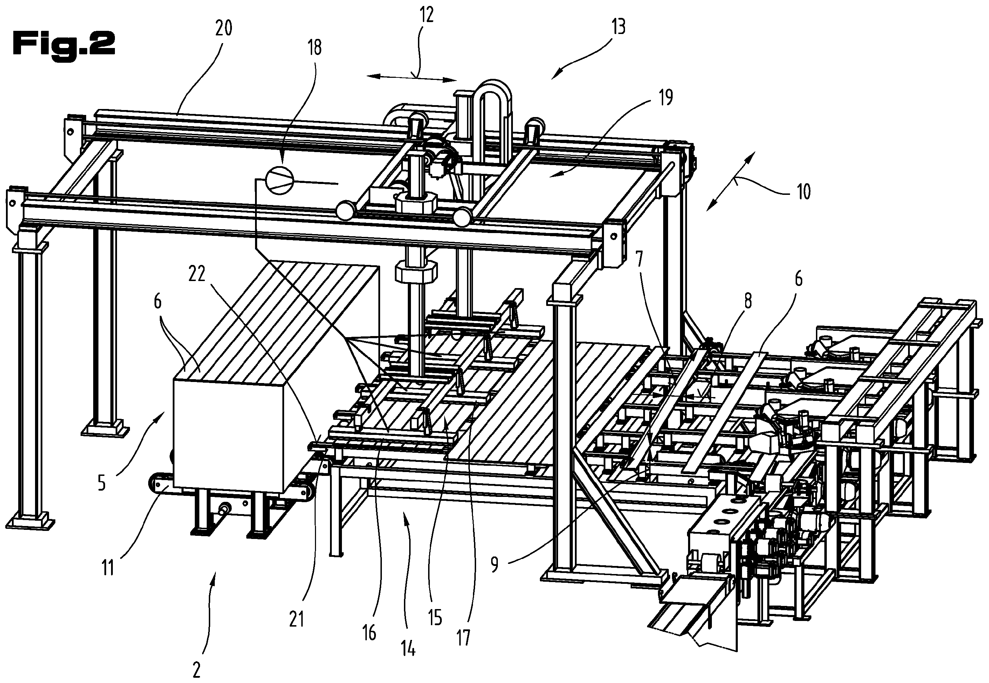

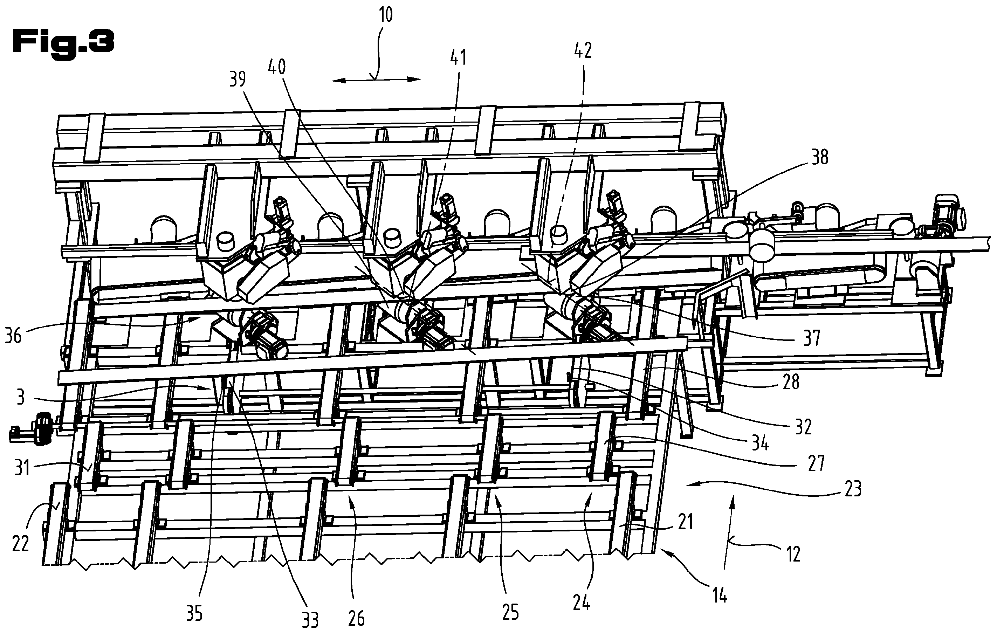

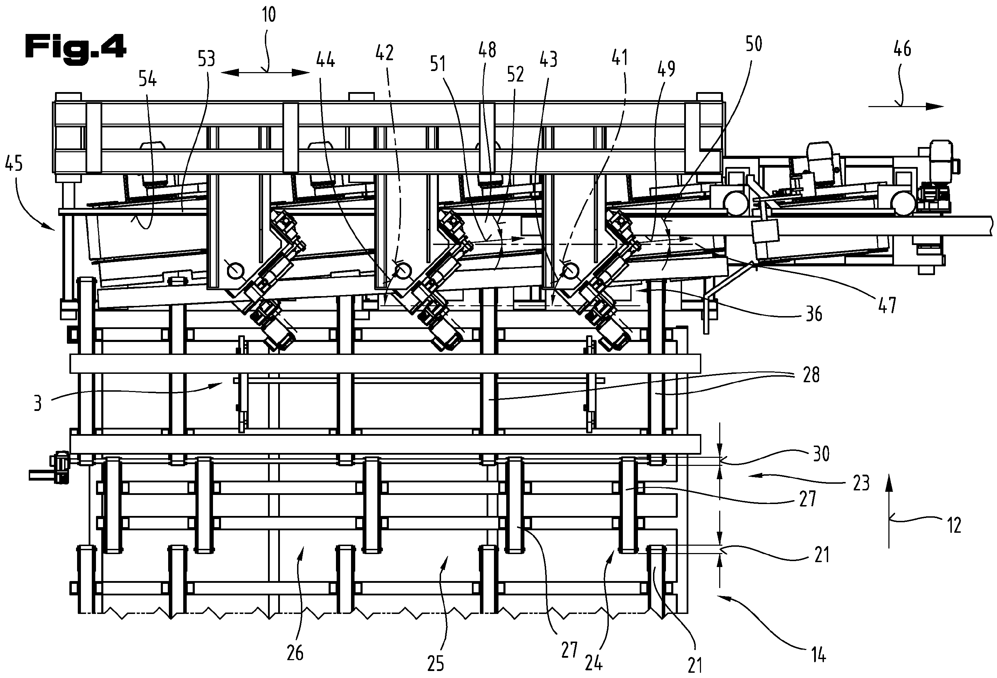

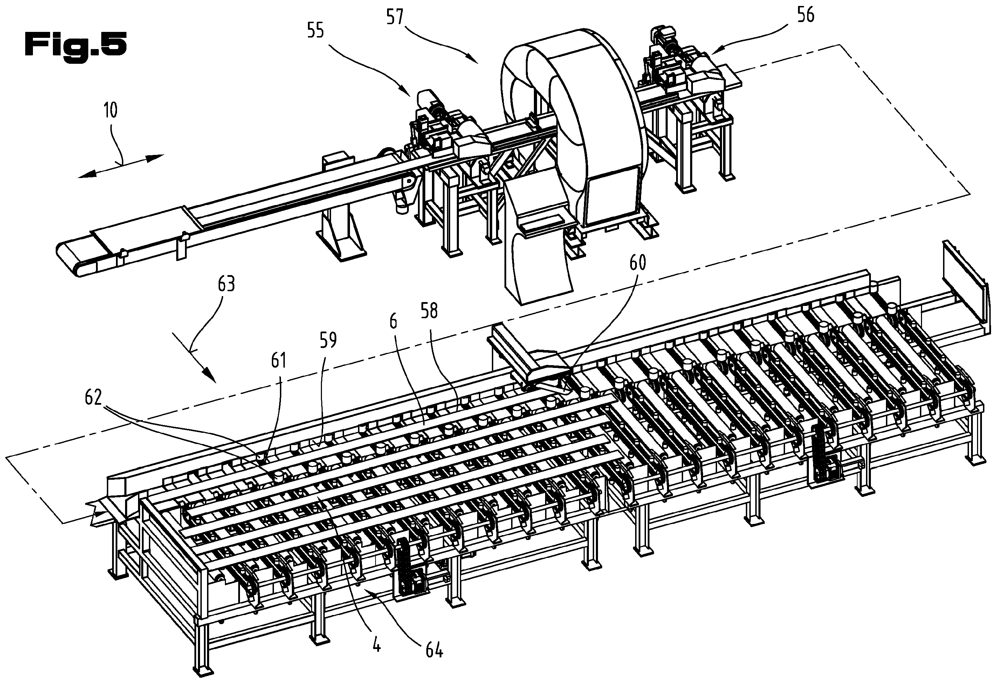

Fig. 1 zeigt eine perspektivische Darstellung eines ersten Ausführungsbeispiels einer Holzlamellenhandlinganlage 1. Fig. 2 zeigt in einer perspektivischen Detailansicht eine Bereitstellstation 2 der Holzlamellenhandlinganlage 1. Fig. 3 zeigt eine perspektivische Detailansicht einer Ausrichtstation 3 der Holzlamellenhandlinganlage 1. Fig. 4 zeigt die Ausrichtstation 3 in einer Draufsicht. Fig. 5 zeigt eine Querförderanlage 4 der Holzlamellenhandlinganlage 1 in einer perspektivischen Ansicht. Die Detaildarstellungen der Fig. 2 bis 5 zeigen Details der Holzlamellenhandlinganlage 1, welche in Fig. 1 in dessen Gesamtheit dargestellt ist. Der Aufbau bzw. die Details des ersten Ausführungsbeispiels der Holzlamellenhandlinganlage 1 wird in weiterer Folge anhand einer Zusammenschau der Fig. 1 bis 5 beschrieben, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Wie aus den Fig. 1 und 2 besonders gut ersichtlich, kann vorgesehen sein, dass die Bereitstellstation 2 zum Bereitstellen einer oder mehrerer übereinander angeordneter Holzlamellenlagen 5 dient. In einer Holzlamellenlage 5 können mehrere Holzlamellen 6 angeordnet sein. Der Übersichtlichkeit halber ist in der Bereitstellstation 2 nur die oberste Holzlamellenlage 5 dargestellt und darunter ein weißer Block dargestellt, da aufgrund der geringen Höhe der Holzlamellenlage 5 und aufgrund der Linienstärke eine sinnvolle Darstellung nicht möglich ist.

Die einzelnen Holzlamellen 6 weisen eine Länge 7, eine Breite 8 und eine Höhe 9 auf. Die Länge 7 entspricht einem Vielfachen der Breite 8. Da die Holzlamellen 6 in der Holzlamellenhandlinganlage 1 in einer bestimmten Orientierung manipuliert werden, kann in der Holzlamellenhandlinganlage 1 eine Lamellenlängsrichtung 10 definiert werden, welche sich in Längserstreckung einer an der Holzlamellenhandlinganlage 1 aufgenommenen Holzlamelle 6 orientiert.

Wie besonders gut aus Fig. 2 ersichtlich, kann vorgesehen sein, dass die Bereitstellstation 2 mehrere Bereitstellförderbänder 11 umfasst, welche in der Lamellenlängsrichtung 10 zueinander beabstandet angeordnet sind. Durch die Bereitstellförderbänder 11 kann die bereitgestellte Holzlamellenlage bzw. der Stapel an Holzlamellenlagen 5 in einer ersten Förderrichtung 12 quer zur Lamellenlängsrichtung 10 verschoben werden. Insbesondere kann vorgesehen sein, dass die Holzlamellenlagen 5 bzw. der Stapel an Holzlamellenlagen 5 mittels eine Flurfördermittels, beispielsweise eines Gabelstaplers, auf das Bereitstellförderband 11 aufgelegt wird.

Weiters kann vorgesehen sein, dass ein Transfermittel 13 ausgebildet ist, welches zum Abnehmen einer der Holzlamellenlagen 5 von der Bereitstellstation 2 und zum Auflegen der Holzlamellenlage 5 auf eine erste Förderstation 14 ausgebildet ist.

Wie aus Fig. 2 ersichtlich, kann vorgesehen sein, dass das Transfermittel 13 einen Transferkopf 15 aufweist. Am Transferkopf 15 können in der Lamellenlängsrichtung 10 zueinander beabstandet ein erster Saugbalken 16 und ein zweiter Saugbalken 17 angeordnet sein.

Natürlich können, wie aus Fig. 2 ersichtlich, neben dem ersten Saugbalken 16 und dem zweiten Saugbalken 17 auch weitere Saugbalken ausgebildet sein. Insbesondere kann vorgesehen sein, dass die einzelnen Saugbalken 16, 17 mit einem Unterdruckerzeuger 18 gekoppelt sind. Der Unterdruckerzeuger 18 kann beispielsweise in Form eines Unterdruckgebläses ausgebildet sein.

Wie aus Fig. 2 weiters ersichtlich, kann vorgesehen sein, dass der Transferkopf 15 höhenverschiebbar an einer Laufkatze 19 aufgenommen ist. Die Laufkatze 19 kann in der ersten Förderrichtung 12 verschiebbar an einem Portal 20 geführt sein. Insbesondere kann vorgesehen sein, dass die Laufkatze 19 mittels eines umlaufenden Zugmittels, wie etwa einem Zahnriemen, relativ zum Portal 20 verschoben wird.

Mittels eines derart ausgebildeten Transferkopfes 15 können die einzelnen nebeneinander angeordneten Holzlamellen 6 der Holzlamellenlager 5 gleichzeitig gegriffen werden. Hierbei muss sich die Dimensionierung der Holzlamellen 6 bzw. die Anzahl der Holzlamellen 6 in der Holzlamellenlage 5 in einem bestimmten Rahmen bewegen, jedoch können diese Grenzen groß sein, sodass unterschiedlich ausgebildete Holzlamellen 6 in der Holzlamellenhandlinganlage 1 manipuliert werden können.

Wie aus Fig. 2 weiters ersichtlich, kann vorgesehen sein, dass die erste Förderstation 14 mehrere in Lamellenlängsrichtung 10 nebeneinander angeordnete, erste Bandförderer 21 umfasst. Die ersten Bandförderer 21 definieren eine Aufnahmeebene 22 an welcher die Holzlamellen 6 aufgelegt werden. Wie aus Fig. 2 ersichtlich, kann vorgesehen sein, dass der erste Bandförderer 21 ebenfalls in Form eines Förderbandes ausgebildet ist, wobei die Aufnahmeebene 22 durch die Oberfläche des Förderbandes bzw. den Förderbandgurt definiert wird. Mittels des ersten Bandförderers 21 bzw. der mehreren nebeneinander angeordneten ersten Bandförderer 21 kann die Holzlamellenlage 5 in der ersten Förderrichtung 12 verschoben werden.

Weiters kann vorgesehen sein, dass in der ersten Förderrichtung 12 an die erste Förderstation 14 anschließend eine Vereinzelungsvorrichtung 23 ausgebildet ist. Die Vereinzelungsvorrichtung 23 kann zum Vereinzeln der in der Holzlamellenlage 5 befindlichen Holzlamellen 6 dienen. Die Vereinzelungsvorrichtung 23 ist in den Fig. 3 und 4 besonders gut ersichtlich.

Die Vereinzelungsvorrichtung 23 kann in der Lamellenlängsrichtung 10 zueinander beabstandet einen ersten Abzugsbandförderer 24, einen zweiten Abzugsbandförderer 25 und einen dritten Abzugsbandförderer 26 aufweisen. Natürlich ist es auch denkbar, dass weitere Abzugsbandförderer bzw. weniger Abzugsbandförderer ausgebildet sind. Weiters ist es auch denkbar, dass die einzelnen Abzugsbandförderer 24, 25, 26 jeweils einen ersten Abzugsbandförderteil 27 und einen zweiten Abzugsbandförderteil 28 aufweisen. Der erste Abzugsbandförderteil 27 und der zweite Abzugsbandförderteil 28 können in Form von eigenständig ausgebildeten Förderbändern umgesetzt sein.

Insbesondere kann vorgesehen sein, dass jeweils die ersten Abzugsbandförderteile 27 mittels eines gemeinsamen Antriebes miteinander gekoppelt sind. Weiters kann vorgesehen sein, dass jeweils die zweiten Abzugsbandförderteile 28 mittels eines gemeinsamen Antriebes miteinander gekoppelt sind. Somit ist es denkbar, dass die ersten Abzugsbandförderteile 27 und die zweiten Abzugsbandförderteile 28 mit unterschiedlichen Geschwindigkeiten betreibbar sind. Insbesondere kann vorgesehen sein, dass das erste Abzugsbandförderteil 27 mit einer höheren Fördergeschwindigkeit als der erste Bandförderer 21 betreibbar ist. Durch diese Maßnahme kann eine Vereinzelung der einzelnen Holzlamellen 6 des am ersten Bandförderer 21 aufgelegten Holzlamellenlage 5 erreicht werden.

Weiters kann vorgesehen sein, dass der erste Bandförderer 21 und der erste Abzugsbandförderteil 27 in einem Überlappungsbereich 29 überlappen. Darüber hinaus kann vorgesehen sein, dass der erste Abzugsbandförderteil 27 und der zweite Abzugsbandförderteil 28 einander in einem weiteren Überlappungsbereich 30 überlappen.

Insbesondere kann vorgesehen sein, dass die Abzugsbandförderer 24, 25, 26 bzw. dessen Abzugsförderbandteile 27, 28 eine Abzugsbandaufnahmeebene 31 bilden, welche an einer Oberfläche der Förderbandgurte ausgebildet ist.

Insbesondere kann vorgesehen sein, dass die Abzugsbandaufnahmeebene 31 und die Aufnahmeebene 22 der ersten Förderstation 14 auf einem gleichen Niveau liegen bzw. deckungsgleich sind.

Wie besonders gut aus Fig. 3 ersichtlich, kann vorgesehen sein, dass im Bereich des zweiten Abzugsbandförderteiles 28 jeweils zwischen zwei der Abzugsbandförderer 25, 26, 27 ein erstes umlaufendes Zugmittel 32 und ein zweites umlaufendes Zugmittel 33 ausgebildet sind. Die umlaufenden Zugmittel 32, 33 können beispielsweise jeweils in Form einer Umlaufkette ausgebildet sein. Weiters ist es auch denkbar, dass weitere umlaufende Zugmittel ausgebildet sind. Darüber hinaus ist es denkbar, dass die einzelnen umlaufenden Zugmittel 32, 33 mittels einer gemeinsamen Antriebswelle miteinander gekoppelt sind und von einem gemeinsamen Antrieb angetrieben werden.

Weiters kann vorgesehen sein, dass am ersten umlaufenden Zugmittel 32 ein erstes Ausrichtelement 34 angeordnet ist. Darüber hinaus kann vorgesehen sein, dass am zweiten umlaufenden Zugmittel 33 ein zweites Ausrichtelement 35 angeordnet ist. Durch die beschriebene Konfiguration können das erste Ausrichtelement 34 und das zweite Ausrichtelement 35 in der Lamellenlängsrichtung 10 zueinander beabstandet angeordnet sein. Insbesondere kann vorgesehen sein, dass das erste Ausrichtelement 34 und das zweite Ausrichtelement 35 optional in die Abzugsbandaufnahmeebene 31 eingebracht werden können, sodass die an den Abzugsbandförderbändern 24, 25, 26 geförderten Holzlamellen 6 den Ausrichtelementen 34, 35 zur Anlage gebracht werden können und somit die einzelnen Holzlamellen 6 ausgerichtet werden können. Wenn die Holzlamellen 6 an den Ausrichtelementen 34, 35 anliegen und von den Abzugsbandförderbändern 24, 25, 26 an diese angedrückt werden, kommt es zu einer Relativbewegung zwischen den Holzlamellen 6 und den Abzugsbandförderbändern 24, 25, 26.

Weiters kann vorgesehen sein, dass die Ausrichtelemente 34, 35 wieder aus der Abzugsbandaufnahmeebene 31 entfernt werden können, um einen Weitertransport der einzelnen Holzlamellen 6 zu ermöglichen. Das Einbringen bzw. wieder Entfernen der Ausrichtelemente 34, 35 aus der Abzugsbandaufnahmeebene 31 kann durch Drehung der umlaufenden Zugmittel 32, 33 um ein Antriebsrad bzw. um ein Umlenkrad erfolgen. Insbesondere kann hierbei vorgesehen sein, dass das umlaufende Zugmittel 32, 33 zwischen dem Antriebsrad und dem Umlenkrad gespannt ist. Weiters kann vorgesehen sein, dass das Ausrichtelement 34, 35 gegenüber dem umlaufenden Zugmittel 32, 33 nach außen vorstehend ausgebildet ist, um eine Anschlagfläche in der Abzugsbandaufnahmeebene 31 bereitstellen zu können. Weiters kann vorgesehen sein, dass am ersten umlaufenden Zugmittel 32 mehrere der ersten Ausrichtelemente 34 angeordnet sind. Die mehreren Ausrichtelemente 34 können hierbei über die Länge des ersten umlaufenden Zugmittels 32 verteilt zueinander beabstandet angeordnet sein. Analog dazu ist es auch denkbar, dass am zweiten umlaufenden Zugmittel 33 mehrere der zweiten Ausrichtelemente 35 angeordnet sind.

In einer weiteren, nicht dargestellten Ausführungsvariante ist es auch denkbar, dass die Ausrichtelemente 34, 35 radial nach außen stehend an einer Walze bzw. an einem Rad angeordnet sind. Das Freigeben der Holzlamelle 6 erfolgt hierbei ähnlich wie beim umlaufenden Zugmittel 32, 33 durch Drehung des Rades.

In wieder einer anderen Ausführungsvariante ist es auch denkbar, dass das erste Ausrichtelement 34 und das zweite Ausrichtelement 35 jeweils mittels eines Linearaktors von oben oder von unten in die Abzugsbandaufnahmeebene 31 einschiebbar sind und in einer vertikalen Schieberichtung zwischen einer Blockierposition, in der sie in die Abzugsbandaufnahmeebene 31 einstehen, und einer Freigabeposition, in der sie aus der Abzugsbandaufnahmeebene 31 zurückgezogen sind, verschiebbar sind.

In einer weiteren, nicht dargestellten Ausführungsvariante ist es auch denkbar, dass die einzelnen Abzugsbandförderer 24, 25, 26 nicht zweiteilig wie in Fig. 3 und 4 dargestellt, ausgebildet sind, sondern sich über die komplette Länge des ersten Abzugsbandförderteiles 27 und des zweiten Abzugsbandförderteiles 28 erstrecken.

Wie in den Fig. 3 und 4 weiters ersichtlich, kann vorgesehen sein, dass am Ende des zweiten Abzugsbandförderteiles 28 eine Beschleunigungsstation 36 ausgebildet ist. Die Beschleunigungsstation 36 kann eine erste Beschleunigungswalze 37 aufweisen. Die erste Beschleunigungswalze 37 kann mit einer ersten Niederhalterwalze 38 zusammenwirken.

Insbesondere kann vorgesehen sein, dass eine der Holzlamellen 6 zwischen der ersten Beschleunigungswalze 37 und der ersten Niederhalterwalze 38 geklemmt wird. Weiters kann vorgesehen sein, dass eine zweite Beschleunigungswalze 39 ausgebildet ist, welche mit einer zweiten Niederhalterwalze 40 zusammenwirkt.

Die erste Beschleunigungswalze 37 und die zweite Beschleunigungswalze 39 können in Lamellenlängsrichtung 10 zueinander beabstandet angeordnet sein. Insbesondere kann vorgesehen sein, dass die erste Beschleunigungswalze 37 um eine erste Rotationsachse 41 rotiert. Weiters kann vorgesehen sein, dass die zweite Beschleunigungswalze 39 um eine zweite Rotationsachse 42 rotiert. Insbesondere kann vorgesehen sein, dass die erste Rotationsachse 41 und die zweite Rotationsachse 42 unterhalb der Abzugsbandaufnahme 31 angeordnet sind.

Der Radius der ersten Beschleunigungswalze 37 bzw. der zweiten Beschleunigungswalze 39 kann hierbei so gewählt werden, dass eine Tangente an die Oberfläche der ersten Beschleunigungswalze 37 bzw. der zweiten Beschleunigungswalze 39 in der Abzugsbandaufnahmeebene 31 liegt. Weiters kann vorgesehen sein, dass die Niederhalterwalzen 38, 40 verstellbar ausgebildet sind, sodass ein Abstand zwischen der Beschleunigungswalze 37 und der ersten Niederhalterwalze 38 bzw. zwischen der zweiten Beschleunigungswalze 39 und der zweiten Niederhalterwalze 40 einstellbar ist. Darüber hinaus kann ein Anpressdruck der Niederhalterwalze 38, 40 an die Beschleunigungswalze 39, 37 angepasst bzw. eingestellt werden.

Wie aus Fig. 4 weiters ersichtlich, kann vorgesehen sein, dass die erste Rotationsachse 41 in einem ersten Rotationsachsenwinkel 43 zur Lamellenlängsrichtung angeordnet ist. Weiters kann vorgesehen sein, dass die zweite Rotationsachse 42 in einem zweiten Rotationsachsenwinkel 44 zur Lamellenlängsrichtung 10 angeordnet ist.

Wie aus Fig. 4 weiters ersichtlich, kann vorgesehen sein, dass in der ersten Förderrichtung 12 anschließend an die Beschleunigungsstation 36 ein Längsauszug 45 ausgebildet ist. Der Längsauszug 45 kann zum Beschleunigen bzw. zum Fördern der Holzlamellen 6 in einer zweiten Förderrichtung 46 dienen.

Insbesondere kann vorgesehen sein, dass die zweite Förderrichtung 46 parallel zur Lamellenlängsrichtung 10 verläuft. Wie aus Fig. 4 weiters ersichtlich, kann vorgesehen sein, dass der Längsauszug 45 ein erstes Längsauszugsförderband 47 und ein zweites Längsauszugsförderband 48 umfasst.

Das erste Längsauszugsförderband 47 weist eine erste Förderorientierung 49 auf. Die erste Förderorientierung 49 ist hierbei in einem ersten Förderorientierungswinkel 50 zur Lamellenlängsrichtung 10 ausgebildet.

Das zweite Längsauszugsförderband 48 weist eine zweite Förderorientierung 51 auf. Die zweite Förderorientierung 51 ist hierbei in einem zweiten Förderorientierungswinkel 52 zur Lamellenlängsrichtung 10 ausgebildet.

Weiters kann vorgesehen sein, dass ein Ausrichtanschlag 53 ausgebildet ist, welcher eine Ausrichtanschlagfläche 54 aufweist. Durch die erste Förderorientierung 49 des ersten Längsauszugsförderbandes 47 und durch die zweite Förderorientierung 51 des zweiten Längsauszugsförderband 48 können die geförderten Holzlamellen 6 an die Ausrichtanschlagfläche 54 des Ausrichtanschlages 53 angedrückt werden.

Dadurch können die Holzlamellen 6 weiter ausgerichtet werden. Dadurch, dass der erste Förderorientierungswinkel 50 bzw. der zweite Förderorientierungswinkel 52 klein gehalten ist, kann eine hauptsächliche Förderung der Holzlamellen 6 in der zweiten Förderrichtung 46 erreicht werden.

Wie besonders gut in Fig. 5 ersichtlich, kann vorgesehen sein, dass anschließend an den Längsauszug 45 eine erste Klemmrollenanordnung 55 und eine zweite Klemmrollenanordnung 56 ausgebildet ist. Zwischen der ersten Klemmrollenanordnung 55 und der zweiten Klemmrollenanordnung 56 kann ein optisches Erfassungsmittel 57 angeordnet sein. Mittels der ersten Klemmrollenanordnung 55 und der zweiten Klemmrollenanordnung 56 kann die Holzlamelle 6 in einer konstanten Geschwindigkeit durch das optische Erfassungsmittel 57 geführt werden. Somit kann mittels des optischen Erfassungsmittels 57 die Oberflächenstruktur bzw. die Oberflächenbeschaffenheit der Holzlamelle 6 erfasst werden. Die erste Klemmrollenanordnung 55 bzw. die zweite Klemmrollenanordnung 56 kann eine Antriebswalze und dieser gegenüberliegend eine Gegenhalterwalze aufweisen. Die Holzlamelle 6 kann zwischen der Antriebswalze und der Gegenhalterwalze geklemmt werden.

Wie aus Fig. 5 weiters ersichtlich, kann vorgesehen sein, dass anschließend an die Klemmrollenanordnungen 55, 56 die Querförderanlage 4 ausgebildet ist. Die Querförderanlage 4 kann einen Abbremstisch 58 umfassen, welcher zum Abbremsen bzw. zur Aufnahme der durch die zweite Klemmrollenanordnung 56 geführten Holzlamellen 6 dient. Der Abbremstisch 58 kann eine Abbremstischauflagefläche 59 aufweisen.

Weiters kann vorgesehen sein, dass ein Abbremselement 60 ausgebildet ist, welches zum Abbremsen der Holzlamellen 6 dient. Das Abbremselement 60 kann beispielsweise in Form eines Schwenkarmes ausgebildet sein, welcher von oben auf die Holzlamelle 6 nach unten schwenken kann und die Holzlamelle 6 gegen den Abbremstisch 58 andrücken kann. Somit kann die Holzlamelle 6 dadurch abgebremst werden, dass diese zwischen dem Abbremselement 60 und dem Abbremstisch 58 geklemmt wird.

Darüber hinaus kann vorgesehen sein, dass im Abbremstisch 58 Ausnehmungen ausgebildet sind, in welchen umlaufende Zugmittel 61 mit daran angeordneten Mitnehmern 62 ausgebildet sind. Die Zugmittel 61 können zum Fördern der Holzlamellen 6 in einer dritten Förderrichtung 63 dienen. Insbesondere kann vorgesehen sein, dass die dritte Förderrichtung 63 quer zur Lamellenlängsrichtung 10 verläuft.

Weiters kann vorgesehen sein, dass das Zugmittel 61 um eine Antriebsrolle und eine Umlenkrolle geführt ist, wobei die Antriebsrolle und die Umlenkrolle in der dritten Förderrichtung 63 zueinander beabstandet angeordnet sind. Insbesondere kann vorgesehen sein, dass pro Zugmittel 61 mehrere der Mitnehmer 62 in der dritten Förderrichtung 63 zueinander beabstandet angeordnet sind. Darüber hinaus kann vorgesehen sein, dass mehrere der Zugmittel 61 mit jeweils darauf angeordneten Mitnehmern 62 in der Lamellenlängsrichtung 10 zueinander beabstandet angeordnet sind. Anschließend an die Querförderanlage 4 kann eine Weiterförderanlage 64 ausgebildet sein. Die Weiterförderanlage 64 kann ebenfalls zum Fördern der Holzlamellen 6 in der dritten Förderrichtung 63 dienen. Insbesondere kann vorgesehen sein, dass die Weiterförderanlage 64, ähnlich wie die Querförderanlage 4 mehrere umlaufende Zugmittel aufweist, an welchen Mitnehmer angeordnet sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Holzlamellenhandlinganlage | 30 | weiterer Überlappungsbereich |
| 2 | Bereitstellstation | 31 | Abzugsbandaufnahmeebene |
| 3 | Ausrichtstation | 32 | erstes umlaufendes Zugmittel |
| 4 | Querförderanlage | 33 | zweites umlaufendes Zugmittel |
| 5 | Holzlamellenlage | 34 | erstes Ausrichtelement |
| 6 | Holzlamelle | 35 | zweites Ausrichtelement |
| 7 | Länge | 36 | Beschleunigungsstation |
| 8 | Breite | 37 | erste Beschleunigungswalze |
| 9 | Höhe | 38 | erste Niederhalterwalze |
| 10 | Lamellenlängsrichtung | 39 | zweite Beschleunigungswalze |
| 11 | Bereitstellförderband | 40 | zweite Niederhalterwalze |
| 12 | erste Förderrichtung | 41 | erste Rotationsachse |
| 13 | Transfermittel | 42 | zweite Rotationsachse |
| 14 | erste Förderstation | 43 | erster Rotationsachsenwinkel |
| 15 | Transferkopf | 44 | zweiter Rotationsachsenwinkel |
| 16 | erster Saugbalken | 45 | Längsauszug |
| 17 | zweiter Saugbalken | 46 | zweite Förderrichtung |
| 18 | Unterdruckerzeuger | 47 | erstes Längsauszugsförderband |
| 19 | Laufkatze | 48 | zweites Längsauszugsförderband |
| 20 | Portal | 49 | erste Förderorientierung |
| 21 | erster Bandförderer | 50 | erster Förderorientierungswinkel |
| 22 | Aufnahmeebene | 51 | zweite Förderorientierung |
| 23 | Vereinzelungsvorrichtung | 52 | zweiter Förderorientierungswinkel |
| 24 | erster Abzugsbandförderer | 53 | Ausrichtanschlag |
| 25 | zweiter Abzugsbandförderer | 54 | Ausrichtanschlagfläche |
| 26 | dritter Abzugsbandförderer | 55 | erste Klemmrollenanordnung |
| 27 | erster Abzugsbandförderteil | 56 | zweite Klemmrollenanordnung |
| 28 | zweiter Abzugsbandförderteil | 57 | optisches Erfassungsmittel |
| 29 | Überlappungsbereich | 58 | Abbremstisch |
| 59 | Abbremstischauflagefläche | | |
| 60 | Abbremselement | | |
| 61 | Zugmittel | | |
| 62 | Mitnehmer | | |
| 63 | dritte Förderrichtung | | |
| 64 | Weiterförderanlage | | |

## Patentansprüche

1. Holzlamellenhandlinganlage (1) umfassend:
- einen ersten Bandförderer (21) mit einer Aufnahmeebene (22) zur Aufnahme einer Holzlamellenlage (5) und zum Fördern der Holzlamellenlage (5) in einer ersten Förderrichtung (12) quer zu einer Lamellenlängsrichtung (10);
- eine Bereitstellstation (2) zum Bereitstellen der Holzlamellenlage (5) oder eines Stapels von mehreren übereinander angeordneten Holzlamellenlagen (5);
- ein Transfermittel (13) zum Abnehmen der Holzlamellenlage (5) von der Bereitstellstation (2) und zum Auflegen der Holzlamellenlage (5) auf den ersten Bandförderer (21);
- ein Abzugsbandförderer (24, 25, 26) mit einer Abzugsbandaufnahmeebene (31) zum Vereinzeln von Holzlamellen (6) der am ersten Bandförderer (21) aufgenommenen Holzlamellenlage (5), wobei sich der Abzugsbandförderer (24, 25, 26) und der erste Bandförderer (21) in der ersten Förderrichtung (12) in einem Überlappungsbereich (29) zumindest teilweise überlappen, wobei der Abzugsbandförderer (24, 25, 26) und der erste Bandförderer (21) mit unterschiedlichen Fördergeschwindigkeiten betreibbar sind;
**dadurch gekennzeichnet, dass** die Holzlamellenhandlinganlage (1) eine Ausrichtstation (3) mit zumindest zwei in der Lamellenlängsrichtung (10) zueinander beabstandete Ausrichtelemente (34, 35) umfasst,
wobei die Ausrichtelemente (34, 35) derart in die Abzugsbandaufnahmeebene (31) einbringbar sind, dass die am Abzugsbandförderer (24, 25, 26) transportierten Holzlamellen (6) an den Ausrichtelementen (34, 35) zur Anlage gebracht und dadurch ausgerichtet werden können, wobei die Ausrichtelemente (34, 35) von der Abzugsbandaufnahmeebene (31) entfernbar sind, um ein Weiterfördern der Holzlamellen (6) mittels des Abzugsbandförderers (24, 25, 26) zu ermöglichen.

2. Holzlamellenhandlinganlage (1) nach Anspruch 1, **dadurch gekennzeichnet, dass** in Lamellenlängsrichtung (10) zueinander beabstandet ein erster Abzugsbandförderer (24), ein zweiter Abzugsbandförderer (25) und ein dritter Abzugsbandförderer (26) angeordnet sind, wobei zwischen dem ersten Abzugsbandförderer (24) und dem zweiten Abzugsbandförderer (25) ein erstes Ausrichtelement (34) angeordnet ist.

3. Holzlamellenhandlinganlage (1) nach Anspruch 1 oder 2, **dadurch gekennzeichnet, dass** die Ausrichtelemente (34, 35) an einem umlaufenden Zugmittel (32) angeordnet sind, wobei die Ausrichtelemente (34, 35) durch Drehung des umlaufenden Zugmittels (32) in die Abzugsbandaufnahmeebene (31) einbringbar und wieder entfernbar sind.

4. Holzlamellenhandlinganlage (1) nach einem der vorhergehenden Ansprüche, **dadurch gekennzeichnet, dass** der Abzugsbandförderer (24, 25, 26) in der ersten Förderrichtung (12) hintereinander angeordnet einen ersten Abzugsbandförderteil (27) und einen zweiten Abzugsbandförderteil (28) umfasst.

5. Holzlamellenhandlinganlage (1) nach einem der vorhergehenden Ansprüche, **dadurch gekennzeichnet, dass** anschließend an den Abzugsbandförderer (24, 25, 26) eine Beschleunigungsstation (36) ausgebildet ist, wobei die Beschleunigungsstation (36) eine erste Beschleunigungswalze (37), welche um eine erste Rotationsachse (41) drehbar ist und eine zweite Beschleunigungswalze (39), welche um eine zweite Rotationsachse (42) drehbar ist, aufweist, wobei die erste Beschleunigungswalze (37) und die zweite Beschleunigungswalze (39) in der Lamellenlängsrichtung (10) zueinander beabstandet angeordnet sind, wobei die erste Rotationsachse (41) parallel zur Abzugsbandaufnahmeebene (31) angeordnet ist und in einem ersten Rotationsachsenwinkel (43) zur Lamellenlängsrichtung (10) ausgerichtet ist und die zweite Rotationsachse (42) parallel zur Abzugsbandaufnahmeebene (31) angeordnet ist und in einem zweiten Rotationsachsenwinkel (44) zur Lamellenlängsrichtung (10) ausgerichtet ist, wobei der erste Rotationsachsenwinkel (43) zwischen 15° und 75°, insbesondere zwischen 30° und 60°, bevorzugt zwischen 40° und 50° beträgt, wobei der zweite Rotationsachsenwinkel (44) zwischen 15° und 75°, insbesondere zwischen 30° und 60°, bevorzugt zwischen 40° und 50° beträgt.

6. Holzlamellenhandlinganlage (1) nach Anspruch 5, **dadurch gekennzeichnet, dass** die erste Beschleunigungswalze (37) mit einer ersten Niederhalterwalze (38) zusammenwirkt, wobei die erste Niederhalterwalze (38) nachgiebig ausgebildet ist, insbesondere dass die erste Niederhalterwalze (38) über den Umfang verteilt angeordnete radial nach außen abstehende Niederhaltewalzenborsten aufweist.

7. Holzlamellenhandlinganlage (1) nach Anspruch 6, **dadurch gekennzeichnet, dass** die Niederhalterwalze (38) durch eine Schleifbürste gebildet ist, wobei die Niederhaltewalzenborsten eine Körnung aufweisen.

8. Holzlamellenhandlinganlage (1) nach einem der vorhergehenden Ansprüche, **dadurch gekennzeichnet, dass** ein Längsauszug (45) ausgebildet ist, welcher zum Fördern der vereinzelten Holzlamellen (6) in einer zweiten Förderrichtung (46) entlang der Lamellenlängsrichtung (10) dient, wobei der Längsauszug (45) zumindest ein erstes Längsauszugsförderband (47) und ein zweites Längsauszugsförderband (48) umfasst, wobei das erste Längsauszugsförderband (47) und das zweite Längsauszugsförderband (48) in der zweiten Förderrichtung (46) hintereinander angeordnet sind, wobei das erste Längsauszugsförderband (47) eine erste Förderorientierung (49) aufweist, welche in einem ersten Förderorientierungswinkel (50) zur zweiten Förderrichtung (46) ausgebildet ist und wobei das zweite Längsauszugsförderband (48) eine zweite Förderorientierung (51) aufweist, welche in einem zweiten Förderorientierungswinkel (52) zur zweiten Förderrichtung (46) ausgebildet ist, wobei der erste Förderorientierungswinkel (50) zwischen 1° und 30°, insbesondere zwischen 3° und 20°, bevorzugt zwischen 5° und 10° beträgt, wobei der zweite Förderorientierungswinkel (52) zwischen 1° und 30°, insbesondere zwischen 3° und 20°, bevorzugt zwischen 5° und 10° beträgt, wobei der Längsauszug (45) einen Ausrichtanschlag (53) mit einer Ausrichtanschlagfläche (54) aufweist, wobei die Ausrichtanschlagfläche (54) parallel zur zweiten Förderrichtung (46) ausgerichtet ist.

9. Holzlamellenhandlinganlage (1) nach einem der vorhergehenden Ansprüche, **dadurch gekennzeichnet, dass** das Transfermittel (13) einen Transferkopf (15) umfasst, der zum Manipulieren der Holzlamellenlage (5) ausgebildet ist, wobei der Transferkopf (15) einen ersten Saugbalken (16) und einen zweiten Saugbalken (17) umfasst, wobei der erste Saugbalken (16) und der zweite Saugbalken (17) in der Lamellenlängsrichtung (10) in einem Abstand zueinander angeordnet sind, wobei das Transfermittel (13) einen Unterdruckerzeuger (18), welcher zum Ausbilden eines Unterdruckes im ersten Saugbalken (16) und im zweiten Saugbalken (17) ausgebildet ist.

10. Holzlamellenhandlinganlage (1) nach Anspruch 8 oder 9, **dadurch gekennzeichnet, dass** eine erste Klemmrollenanordnung (55) ausgebildet ist, welche zum Fördern der vereinzelten Holzlamellen (6) in der zweiten Förderrichtung (46) dient.

11. Holzlamellenhandlinganlage (1) nach Anspruch 10, **dadurch gekennzeichnet, dass** in zweiter Förderrichtung (46) anschließend an die erste Klemmrollenanordnung (55) ein optisches Erfassungsmittel (57) ausgebildet ist, mittels dem die Oberfläche der vereinzelten Holzlamellen (6) erfassbar ist.

12. Holzlamellenhandlinganlage (1) nach Anspruch 11, **dadurch gekennzeichnet, dass** in zweiter Förderrichtung (46) anschließend an das optische Erfassungsmittel (57) eine zweite Klemmrollenanordnung (56) ausgebildet ist, wobei die erste Klemmrollenanordnung (55) und die zweite Klemmrollenanordnung (56) in einem Klemmrollabstand zueinander angeordnet sind, wobei der Klemmrollenabstand kleiner ist als eine minimale Lamellenlänge.

13. Holzlamellenhandlinganlage (1) nach Anspruch 12, **dadurch gekennzeichnet, dass** in zweiter Förderrichtung (46) anschließend an die zweite Klemmrollenanordnung (56) ein Abbremstisch (58) mit einer Abbremstischauflagefläche (59) und einem oberhalb der Abbremstischauflagefläche (59) angeordneten Abbremselement (60) ausgebildet ist, wobei das Abbremselement (60) zum Andrücken der Holzlamellen (6) an die Abbremstischauflagefläche (59) ausgebildet ist.

14. Holzlamellenhandlinganlage (1) nach Anspruch 3, **dadurch gekennzeichnet, dass** an dem umlaufenden Zugmittel (32) zumindest zwei der ersten Ausrichtelemente (34) angeordnet sind.

15. Holzlamellenhandlinganlage (1) nach Anspruch 13, **dadurch gekennzeichnet, dass** im Bereich des Abbremstisches (58) eine Querförderanlage (4) ausgebildet ist, wobei die Querförderanlage (4) zum Fördern der Holzlamellen (6) in einer dritten Förderrichtung (63) quer zur Lamellenlängsrichtung (10) dienen, wobei die Querförderanlage (4) ein umlaufendes Zugmittel (61) mit mehreren darauf angeordneten Mitnehmern (62) umfasst.

16. Verfahren zum Betreiben einer Holzlamellenhandlinganlage (1) nach einem der Ansprüche 1 bis 15, **gekennzeichnet durch** die Verfahrensschritte:
- Bereitstellen einer Holzlamellenlage (5) oder eines Stapels von mehreren übereinander angeordneten Holzlamellenlagen (5) an der Bereitstellstation (2);
- Abnehmen der Holzlamellenlage (5) von der Bereitstellstation (2) und Auflegen der Holzlamellenlage (5) auf den ersten Bandförderer (21) mittels des Transfermittels (13);
- Fördern der Holzlamellenlage (5) in der ersten Förderrichtung (12) quer zur Lamellenlängsrichtung (10) mittels dem ersten Bandförderer (21) in einer ersten Fördergeschwindigkeit;
- Betreiben des Abzugsbandförderers (24) mit einer zweiten Fördergeschwindigkeit, wobei die zweite Fördergeschwindigkeit größer ist, als die erste Fördergeschwindigkeit, und wobei dadurch die Holzlamellen (6) vom Abzugsbandförderer (24) abgezogen werden wenn sie im Überlappungsbereich (29) sind, wobei am Abzugsbandförderer (24) einen größeren Abstand zueinander aufweisen, als am ersten Bandförderer (21);
- Einbringen der Ausrichtelemente (34) der Ausrichtstation (3) in die Abzugsbandaufnahmeebene (31), so dass die am Abzugsbandförderer (24) transportierten Holzlamellen (6) an den Ausrichtelementen (34) zur Anlage gebracht und dadurch ausgerichtet werden;
- Entfernen der Ausrichtelemente (34) von der Abzugsbandaufnahmeebene (31), um ein Weiterfördern der Holzlamellen (6) mittels des Abzugsbandförderers (24) zu ermöglichen.

## Claims

1. A wooden lamella handling system (1) comprising
- a first belt conveyor (21) with a receiving plane (22) for receiving a wooden lamella layer (5) and for conveying the wooden lamella layer (5) in a first conveying direction (12) transversely to a longitudinal lamella direction (10);
- a supply station (2) for providing the wooden lamella layer (5) or a stack of multiple wooden lamella layers (5) arranged one above the other;
- a transfer means (13) for removing the wooden lamella layer (5) from the supply station (2) and for placing the wooden lamella layer (5) on the first belt conveyor (21);
- a discharge belt conveyor (24, 25, 26) with a discharge belt receiving plane (31) for separating wooden lamellae (6) of the wooden lamella layer (5) received on the first belt conveyor (21), wherein the discharge belt conveyor (24, 25, 26) and the first belt conveyor (21) at least partially overlap in an overlap area (29) in the first conveying direction (12), wherein the discharge belt conveyor (24, 25, 26) and the first belt conveyor (21) can be operated at different conveying speeds;
**characterized in that** the wooden lamella handling system (1) comprises an alignment station (3) with at least two alignment elements (34, 35) spaced apart from one another in the longitudinal lamella direction (10),
wherein the alignment elements (34, 35) can be introduced into the discharge belt receiving plane (31) in such a way that the wooden lamellae (6) transported on the discharge belt conveyor (24, 25, 26) can be brought into contact with the alignment elements (34, 35) and thereby aligned, wherein the alignment elements (34, 35) can be removed from the discharge belt receiving plane (31) in order to enable further conveying of the wooden lamellae (6) by means of the discharge belt conveyor (24, 25, 26).

2. The wooden lamella handling system (1) according to claim 1, **characterized in that** a first discharge belt conveyor (24), a second discharge belt conveyor (25) and a third discharge belt conveyor (26) are arranged at a distance from one another in the longitudinal lamella direction (10), wherein a first alignment element (34) is arranged between the first discharge belt conveyor (24) and the second discharge belt conveyor (25).

3. The wooden lamella handling system (1) according to claim 1 or 2, **characterized in that** the alignment elements (34, 35) are arranged on a circumferential traction means (32), wherein the alignment elements (34, 35) are insertable into and removable from the discharge belt receiving plane (31) by rotation of the circumferential traction means (32).

4. The wooden lamella handling system (1) according to one of the preceding claims, **characterized in that** the discharge belt conveyor (24, 25, 26) comprises a first discharge belt conveyor part (27) and a second discharge belt conveyor part (28) arranged one behind the other in the first conveying direction (12).

5. The wooden lamella handling system (1) according to one of the preceding claims, **characterized in that** an acceleration station (36) is formed downstream of the discharge belt conveyor (24, 25, 26), wherein the acceleration station (36) comprises a first acceleration roller (37), which is rotatable about a first axis of rotation (41), and a second acceleration roller (39), which is rotatable about a second axis of rotation (42), wherein the first acceleration roller (37) and the second acceleration roller (39) are arranged at a distance from one another in the longitudinal lamella direction (10), wherein the first rotation axis (41) is arranged parallel to the discharge belt receiving plane (31) and is aligned at a first rotation axis angle (43) to the longitudinal lamella direction (10) and the second rotation axis (42) is arranged parallel to the discharge belt receiving plane (31) and is aligned at a second rotation axis angle (44) to the longitudinal lamella direction (10), wherein the first rotation axis angle (43) is between 15° and 75°, in particular between 30° and 60°, preferably between 40° and 50°, wherein the second rotation axis angle (44) is between 15° and 75°, in particular between 30° and 60°, preferably between 40° and 50°.

6. The wooden lamella handling system (1) according to claim 5, **characterized in that** the first acceleration roller (37) cooperates with a first hold-down roller (38), wherein the first hold-down roller (38) is configured to be flexible, in particular that the first hold-down roller (38) has radially outwardly projecting hold-down roller bristles arranged distributed over the circumference.

7. The wooden lamella handling system (1) according to claim 6, **characterized in that** the hold-down roller (38) is formed by an abrasive brush, wherein the hold-down roller bristles have a grain.

8. The wooden lamella handling system (1) according to one of the preceding claims, **characterized in that** a longitudinal pull-out (45) is formed, which serves to convey the separated wooden lamellae (6) in a second conveying direction (46) along the longitudinal lamella direction (10), wherein the longitudinal pull-out (45) comprises at least a first longitudinal pull-out conveyor belt (47) and a second longitudinal pull-out conveyor belt (48), wherein the first longitudinal pull-out conveyor belt (47) and the second longitudinal pull-out conveyor belt (48) are arranged one behind the other in the second conveying direction (46), wherein the first longitudinal pull-out conveyor belt (47) has a first conveying orientation (49) which is formed at a first conveying orientation angle (50) to the second conveying direction (46), and wherein the second longitudinal pull-out conveyor belt (48) has a second conveying orientation (51) which is formed at a second conveying orientation angle (52) to the second conveying direction (46), wherein the first conveying orientation angle (50) is between 1° and 30°, in particular between 3° and 20°, preferably between 5° and 10°, wherein the second conveying orientation angle (52) is between 1° and 30°, in particular between 3° and 20°, preferably between 5° and 10°, wherein the longitudinal pull-out (45) has an alignment stop (53) with an alignment stop surface (54), wherein the alignment stop surface (54) is aligned parallel to the second conveying direction (46).

9. The wooden lamella handling system (1) according to one of the preceding claims, **characterized in that** the transfer means (13) comprises a transfer head (15) which is configured for manipulating the wooden lamella layer (5), wherein the transfer head (15) comprises a first suction bar (16) and a second suction bar (17), wherein the first suction bar (16) and the second suction bar (17) are arranged at a distance from one another in the longitudinal lamella direction (10), wherein the transfer means (13) comprises a negative pressure generator (18) which is configured to form a negative pressure in the first suction bar (16) and in the second suction bar (17).

10. The wooden lamella handling system (1) according to claim 8 or 9, **characterized in that** a first clamping roller arrangement (55) is formed, which serves to convey the separated wooden lamellae (6) in the second conveying direction (46).

11. The wooden lamella handling system (1) according to claim 10, **characterized in that** an optical detection means (57), by means of which the surface of the separated wooden lamellae (6) can be detected, is formed downstream of the first clamping roller arrangement (55) in the second conveying direction (46).

12. The wooden lamella handling system (1) according to claim 11, **characterized in that** a second clamping roller arrangement (56) is formed downstream of the optical detection means (57) in the second conveying direction (46), wherein the first clamping roller arrangement (55) and the second clamping roller arrangement (56) are arranged at a clamping roller spacing from one another, wherein the clamping roller spacing is smaller than a minimum lamella length.

13. The wooden lamella handling system (1) according to claim 12, **characterized in that** a braking table (58) with a braking table support surface (59) and a braking element (60) arranged above the braking table support surface (59) is formed downstream of the second clamping roller arrangement (56) in the second conveying direction (46), wherein the braking element (60) is configured to press the wooden lamellae (6) against the braking table support surface (59).

14. The wooden lamella handling system (1) according to claim 3, **characterized in that** at least two of the first alignment elements (34) are arranged on the circumferential traction means (32).

15. The wooden lamella handling system (1) according to claim 13, **characterized in that** a transverse conveying system (4) is formed in the region of the braking table (58), wherein the transverse conveying system (4) serves to convey the wooden lamellae (6) in a third conveying direction (63) transversely to the longitudinal lamella direction (10), wherein the transverse conveying system (4) comprises a circumferential traction means (61) with a plurality of drivers (62) arranged thereon.

16. A method for operating a wooden lamella handling system (1) according to one of claims 1 to 15, **characterized by** the method steps:
- providing a wooden lamella layer (5) or a stack of a plurality of wooden lamella layers (5) arranged one above the other at the supply station (2);
- removing the wooden lamella layer (5) from the supply station (2) and placing the wooden lamella layer (5) on the first belt conveyor (21) by means of the transfer means (13);
- conveying the wooden lamella layer (5) in the first conveying direction (12) transversely to the longitudinal lamella direction (10) by means of the first belt conveyor (21) at a first conveying speed;
- operating the discharge belt conveyor (24) at a second conveying speed, wherein the second conveying speed is greater than the first conveying speed, and wherein the wooden lamellae (6) are thereby discharged by the discharge belt conveyor (24) when they are in the overlap area (29), wherein the distance between them on the discharge belt conveyor (24) is greater than on the first belt conveyor (21);
- introducing the alignment elements (34) of the alignment station (3) into the discharge belt receiving plane (31), so that the wooden lamellae (6) transported on the discharge belt conveyor (24) are brought into contact with the alignment elements (34) and thereby aligned;
- removing the alignment elements (34) from the discharge belt receiving plane (31) in order to enable further conveying of the wooden lamellae (6) by means of the discharge belt conveyor (24).

## Revendications

1. Installation de manutention de lamelles de bois (1) comprenant :
- un premier convoyeur à bande (21) avec un plan de réception (22) pour la réception d'une couche de lamelles de bois (5) et pour le transport de la couche de lamelles de bois (5) dans une première direction de transport (12) transversalement à une direction longitudinale des lamelles (10) ;
- un poste de mise à disposition (2) pour la mise à disposition de la couche de lamelles de bois (5) ou d'une pile de plusieurs couches de lamelles de bois (5) disposées les unes au-dessus des autres ;
- un moyen de transfert (13) pour prélever la couche de lamelles de bois (5) du poste de mise à disposition (2) et pour déposer la couche de lamelles de bois (5) sur le premier convoyeur à bande (21) ;
- un convoyeur à bande de séparation (24, 25, 26) avec un plan de réception de bande de séparation (31) pour séparer les lamelles de bois (6) de la couche de lamelles de bois (5) reçue sur le premier convoyeur à bande (21), dans laquelle le convoyeur à bande de séparation (24, 25, 26) et le premier convoyeur à bande (21) se chevauchent au moins partiellement dans la première direction de transport (12) dans une zone de chevauchement (29), le convoyeur à bande de séparation (24, 25, 26) et le premier convoyeur à bande (21) pouvant être actionnés à des vitesses de transport différentes ; **caractérisée en ce que** l'installation de manutention de lamelles de bois (1) comprend :
- un poste d'alignement (3) avec au moins deux éléments d'alignement (34, 35) espacés l'un de l'autre dans la direction longitudinale des lamelles (10),
dans laquelle les éléments d'alignement (34, 35) peuvent être introduits dans le plan de réception de bande de séparation (31) de sorte que les lamelles de bois (6) transportées sur le convoyeur à bande de séparation (24, 25, 26) peuvent être amenées en appui contre les éléments d'alignement (34, 35) et ainsi être alignées, dans laquelle les éléments d'alignement (34, 35) peuvent être retirés du plan de réception de bande de séparation (31) pour permettre la poursuite du transport des lamelles de bois (6) au moyen du convoyeur à bande de séparation (24, 25, 26).

2. Installation de manutention de lamelles de bois (1) selon la revendication 1, **caractérisée en ce que** dans la direction longitudinale des lamelles (10) sont disposés, espacés les uns des autres, un premier convoyeur à bande de séparation (24), un deuxième convoyeur à bande de séparation (25) et un troisième convoyeur à bande de séparation (26), dans laquelle un premier élément d'alignement (34) est disposé entre le premier convoyeur à bande de séparation (24) et le deuxième convoyeur à bande de séparation (25).

3. Installation de manutention de lamelles de bois (1) selon la revendication 1 ou 2, **caractérisée en ce que** les éléments d'alignement (34, 35) sont disposés sur un élément de traction rotatif (32), dans laquelle les éléments d'alignement (34, 35) peuvent être introduits dans le plan de réception de bande de séparation (31) et retirés de celui-ci par rotation de l'élément de traction rotatif (32).

4. Installation de manutention de lamelles de bois (1) selon l'une des revendications précédentes, **caractérisée en ce que** le convoyeur à bande de séparation (24, 25, 26) comprend, disposés l'un derrière l'autre dans la première direction de transport (12), une première partie de convoyeur à bande de séparation (27) et une deuxième partie de convoyeur à bande de séparation (28).

5. Installation de manutention de lamelles de bois (1) selon l'une des revendications précédentes, **caractérisée en ce qu'**une station d'accélération (36) est prévue à la suite du convoyeur à bande de séparation (24, 25, 26), dans laquelle la station d'accélération (36) comprend un premier rouleau d'accélération (37) qui peut tourner autour d'un premier axe de rotation (41) et un deuxième rouleau d'accélération (39) qui peut tourner autour d'un deuxième axe de rotation (42), dans laquelle le premier rouleau d'accélération (37) et le deuxième rouleau d'accélération (39) sont disposés de manière espacée entre eux dans la direction longitudinale des lamelles (10), dans laquelle le premier axe de rotation (41) est disposé parallèlement au plan de réception de bande de séparation (31) et est orienté selon un premier angle d'axe de rotation (43) par rapport à la direction longitudinale des lamelles (10), et dans laquelle le deuxième axe de rotation (42) est disposé parallèlement au plan de réception de bande de séparation (31) et est orienté selon un deuxième angle d'axe de rotation (44) par rapport à la direction longitudinale des lamelles (10), dans laquelle le premier angle d'axe de rotation (43) est compris entre 15° et 75°, plus particulièrement entre 30° et 60°, de préférence entre 40° et 50°, dans laquelle le deuxième angle d'axe de rotation (44) étant compris entre 15° et 75°, plus particulièrement entre 30° et 60°, de préférence entre 40° et 50°.

6. Installation de manutention de lamelles de bois (1) selon la revendication 5, **caractérisée en ce que** le premier rouleau d'accélération (37) interagit avec un premier rouleau presseur (38), dans laquelle le premier rouleau presseur (38) est conçu de manière élastique, plus particulièrement **en ce que** le premier rouleau presseur (38) présente des soies de rouleau presseur s'étendant radialement vers l'extérieur et réparties sur la circonférence.

7. Installation de manutention de lamelles de bois (1) selon la revendication 6, **caractérisée en ce que** le rouleau presseur (38) est constitué d'une brosse abrasive, dans laquelle les soies du rouleau presseur présentent un grain.

8. Installation de manutention de lamelles de bois (1) selon l'une des revendications précédentes, **caractérisée en ce qu'**un dispositif d'extraction longitudinale (45) est prévu, qui sert à transporter les lamelles de bois séparées (6) dans une deuxième direction de transport (46) le long de la direction longitudinale des lamelles (10), dans laquelle le dispositif d'extraction longitudinale (45) comprend au moins une première bande transporteuse d'extraction longitudinale (47) et une deuxième bande transporteuse d'extraction longitudinale (48), dans laquelle la première bande transporteuse d'extraction longitudinale (47) et la deuxième bande transporteuse d'extraction longitudinale (48) sont disposées l'une derrière l'autre dans la deuxième direction de transport (46), dans laquelle la première bande transporteuse d'extraction longitudinale (47) présente une première orientation de transport (49) qui est disposée selon un premier angle d'orientation de transport (50) par rapport à la deuxième direction de transport (46), et dans laquelle la deuxième bande transporteuse d'extraction longitudinale (48) présente une deuxième orientation de transport (51) qui est disposée selon un deuxième angle d'orientation de transport (52) par rapport à la deuxième direction de transport (46), dans laquelle le premier angle d'orientation de transport (50) est compris entre 1° et 30°, plus particulièrement entre 3° et 20°, de préférence entre 5° et 10°, dans laquelle le deuxième angle d'orientation de transport (52) est compris entre 1° et 30°, plus particulièrement entre 3° et 20°, de préférence entre 5° et 10°, dans laquelle le dispositif d'extraction longitudinale (45) présente une butée d'alignement (53) avec une surface de butée d'alignement (54), dans laquelle la surface de butée d'alignement (54) est orientée parallèlement à la deuxième direction de transport (46).

9. Installation de manutention de lamelles de bois (1) selon l'une des revendications précédentes, **caractérisée en ce que** le moyen de transfert (13) comprend une tête de transfert (15) qui est conçue pour manipuler la couche de lamelles de bois (5), dans laquelle la tête de transfert (15) comprend une première barre d'aspiration (16) et une deuxième barre d'aspiration (17), dans laquelle la première barre d'aspiration (16) et la deuxième barre d'aspiration (17) sont disposées à une distance entre elles dans la direction longitudinale des lamelles (10), dans laquelle le moyen de transfert (13) comprend un générateur de vide (18) qui est conçu pour créer un vide dans la première barre d'aspiration (16) et dans la deuxième barre d'aspiration (17).

10. Installation de manutention de lamelles de bois (1) selon la revendication 8 ou 9, **caractérisée en ce qu'**un premier dispositif à rouleaux de serrage (55) est prévu, qui sert à transporter les lamelles de bois séparées (6) dans la deuxième direction de transport (46).

11. Installation de manutention de lamelles de bois (1) selon la revendication 10, **caractérisée en ce que** dans la deuxième direction de transport (46), à la suite du premier dispositif à rouleaux de serrage (55), un moyen de détection optique (57) est prévu, au moyen duquel la surface des lamelles de bois séparées (6) peut être détectée.

12. Installation de manutention de lamelles de bois (1) selon la revendication 11, **caractérisée en ce que** dans la deuxième direction de transport (46), à la suite du moyen de détection optique (57), un deuxième dispositif à rouleaux de serrage (56) est prévu, dans laquelle le premier dispositif à rouleaux de serrage (55) et le deuxième dispositif à rouleaux de serrage (56) sont disposés à une distance entre les rouleaux de serrage, dans laquelle la distance entre les rouleaux de serrage est inférieure à une longueur minimale de lamelle.

13. Installation de manutention de lamelles de bois (1) selon la revendication 12, **caractérisée en ce que** dans la deuxième direction de transport (46), à la suite du deuxième dispositif à rouleaux de serrage (56), sont prévus une table de freinage (58) avec une surface d'appui de table de freinage (59) et un élément de freinage (60) disposé au-dessus de la surface d'appui de table de freinage (59), dans laquelle l'élément de freinage (60) est conçu pour presser les lamelles de bois (6) contre la surface d'appui de table de freinage (59).

14. Installation de manutention de lamelles de bois (1) selon la revendication 3, **caractérisée en ce qu'**au moins deux des premiers éléments d'alignement (34) sont disposés sur l'élément de traction rotatif (32).

15. Installation de manutention de lamelles de bois (1) selon la revendication 13, **caractérisée en ce qu'**une installation de transport transversal (4) est prévue dans la zone de la table de freinage (58), dans laquelle l'installation de transport transversal (4) sert à transporter les lamelles de bois (6) dans une troisième direction de transport (63) transversalement à la direction longitudinale des lamelles (10), dans laquelle l'installation de transport transversal (4) comprend un élément de traction rotatif (61) avec plusieurs éléments d'entraînement (62) disposés sur celui-ci.

16. Procédé de fonctionnement d'une installation de manutention de lamelles de bois (1) selon l'une des revendications 1 à 15, **caractérisé par** les étapes suivantes :
- mise à disposition d'une couche de lamelles de bois (5) ou d'une pile de plusieurs couches de lamelles de bois (5) disposées les unes au-dessus des autres au poste de mise à disposition (2) ;
- prélèvement de la couche de lamelles de bois (5) du poste de mise à disposition (2) et dépôt de la couche de lamelles de bois (5) sur le premier convoyeur à bande (21) au moyen du moyen de transfert (13) ;
- transport de la couche de lamelles de bois (5) dans la première direction de transport (12) transversalement à la direction longitudinale des lamelles (10) au moyen du premier convoyeur à bande (21) à une première vitesse de transport ;
- fonctionnement du convoyeur à bande de séparation (24) à une deuxième vitesse de transport, dans laquelle la deuxième vitesse de transport est supérieure à la première vitesse de transport, et dans laquelle les lamelles de bois (6) sont ainsi séparées par le convoyeur à bande de séparation (24) lorsqu'elles se trouvent dans la zone de chevauchement (29), dans laquelle elles présentent ainsi une plus grande distance entre elles sur le convoyeur à bande de séparation (24) que sur le premier convoyeur à bande (21) ;
- introduction des éléments d'alignement (34) du poste d'alignement (3) dans le plan de réception de bande de séparation (31), de sorte que les lamelles de bois (6) transportées sur le convoyeur à bande de séparation (24) sont amenées en appui contre les éléments d'alignement (34) et ainsi alignées ;
- retrait des éléments d'alignement (34) du plan de réception de bande de séparation (31) pour permettre la poursuite du transport des lamelles de bois (6) au moyen du convoyeur à bande de séparation (24).
